# EUROPÄISCHE PATENTANMELDUNG

(11) **EP 1 676 903 A2**
(43) Veröffentlichungstag der Anmeldung: **05.07.2006**
(21) Anmeldenummer: 05022510.1
(22) Anmeldetag: 14.10.2005
(51) Int. Cl.: C10M 171/00, F16C 33/44, F16C 33/66

(54) **Wälzlagerkäfig**

(30) Priorität: 01.12.2004 DE 102004058518
(71) Anmelder: Gebrüder Reinfurt GmbH & Co. KG, 97074 Würzburg (DE)
(72) Erfinder: Niedermeier, Herbert, Dipl.-Ing., 97490 Poppenhausen (DE)
(74) Vertreter: Müller-Boré & Partner Patentanwälte

(57) **Zusammenfassung**

Die vorliegende Erfindung betrifft einen Käfig für Wälzlager, insbesondere Kugellager, dessen Verwendung in einem hochtourigen Kugellager (Drehzahlkennwert n x dm > 1.000.000 mm/min), insbesondere für industrielle Spindellageranwendungen und im medizinischen Bereich, insbesondere in der Dentaltechnik, sowie ein Verfahren zu dessen Herstellung. Der erfindungsgemäße Käfig umfasst einen verstärkten Verbundwerkstoff, der aus Epoxidharz und Fasern oder Gewebe aufgebaut ist, wobei der verstärkte Verbundwerkstoff als Additiv zur Verringerung des Reibwerts sowohl mindestens einen Festschmierstoff, ausgewählt aus Fluorpolymeren, vorzugsweise perfluorierten Polymeren, insbesondere Polytetrafluorethylen, als auch mindestens ein niederviskoses, sterilisationsfestes Öl auf Basis von Mineralöl, Silikonöl, Esteröl oder perfluoriertem Polyetheröl enthält.

## Beschreibung

Die vorliegende Erfindung betrifft einen Wälzlagerkäfig bzw. Käfig für Wälzlager, insbesondere Kugellager, dessen Verwendung in einem hochtourigen Kugellager (Drehzahlkennwert n x dm > 1.000.000 ,mm/min), insbesondere für industrielle Spindellageranwendungen und im medizinischen Bereich, insbesondere in der Dentaltechnik, sowie ein Verfahren zu dessen Herstellung.

Im Stand der Technik sind als geeignete Käfigmaterialien für Kugellager insbesondere metallische Werkstoffe, wie Hartmessing, Bronze, Aluminium oder Edelstahl, und Kunststoff- bzw. Verbundwerkstoffe, wie gewebeverstärktes Phenolharz, Hostaform (POM) oder glasfaserverstärktes Polyamid, beschrieben. Beispielsweise wird in DE 80 29 266 U1 ein Käfig aus Stahl beschrieben, der mit einem Kunststoff, vorzugsweise Nylon, beschichtet ist. Ferner ist aus DE 296 02 481 U1 ein Kunststoffkammkäfig für Kugellager bekannt, wobei ein Kunststoff durch Glas- oder Kohlefasern verstärkt ist. DE 203 06 436 U1 beschreibt Käfige aus einem mit PTFE gefülltem Polyaryletherketon. Eines der wesentlichen Probleme bei Käfigen aus Kunststoffwerkstoffen bzw. Verbundwerkstoffen, beispielsweise einem gewebeverstärkten Phenolharz mit einem Baumwollfeinstgewebe, besteht darin, daß diese Materialien meist nur bis zu etwa 120°C thermisch stabil sind und daher eine Dampfdrucksterilisation bei 136°C nicht möglich ist. Insbesondere für Anwendungen im medizinischen Bereich stellt dies aber ein großes Problem dar.

Der vorliegenden Erfindung liegt somit die Aufgabe zugrunde, einen Käfig für ein Wälzlager, insbesondere ein Kugellager, aus einem Verbundwerkstoff bereitzustellen, der einer Sterilisationsbehandlung unterzogen werden kann, ohne die Festigkeit des Werkstoffs signifikant zu verschlechtern, und darüber hinaus eine verbesserte Lebensdauer und eine Eignung zur Verwendung in hochtourigen Wälz- bzw. Kugellagern, insbesondere im medizinischen Bereich, aufweisen soll.

Diese Aufgabe wird durch die in den Ansprüchen gekennzeichneten Ausführungsformen gelöst.

Die vorliegende Erfindung stellt einen Wälzlagerkäfig bzw. Käfig für Wälzlager, insbesondere Kugellager, bereit, welcher einen verstärkten Verbundwerkstoff umfasst, der aus Epoxidharz und Fasern oder Gewebe aufgebaut ist und wobei der verstärkte Verbundwerkstoff als Additiv zur Verringerung des Reibwerts sowohl mindestens einen Festschmierstoff, ausgewählt aus Fluorpolymeren, vorzugsweise perfluorierten Polymeren, insbesondere Polytetrafluorethylen, als auch mindestens ein niederviskoses, sterilisationsfestes Öl auf Basis von Mineralöl, Silikonöl, Esteröl oder perfluoriertem Polyetheröl enthält.

Der erfindungsgemäße Käfig bzw. das erfindungsgemäß vorgesehene Käfigmaterial ist für eine Verwendung in hochtourigen Kugellagern, insbesondere für industrielle Spindellageranwendungen und im medizinischen Bereich, insbesondere in der Dentaltechnik besonders geeignet. Als Beispiel für ein derartiges Wälzlager kann ein Kugellager vorgesehen werden, das üblicherweise einen Innenring, einen Außenring, Kugeln und einen Käfig umfasst, wobei sich die Kugeln auf sogenannten Laufbahnen bewegen. Die Aufgabe eines Kugellagerkäfigs besteht im allgemeinen darin zu verhindern, dass die Rollkörper aneinander reiben und in einem gleichmäßigen Abstand zueinander gehalten werden. Kugellager mit Drehzahlkennwerten n x dm > 1.000.000 mm/min, die als Spindellager in industriellen Anwendungen oder im medizinischen Bereich, insbesondere in der Dentaltechnik laufen, können oftmals nicht mit schleifenden Dichtungen versehen werden, da diese im Betrieb hohe Reibwerte erzielen und dadurch die Temperatur im Kugellager deutlich erhöhen. Insbesondere im Dental-Turbinenhandstuck ist aber eine Temperaturerhöhung nicht akzeptabel, da eine Temperatur > 38°C von Zahntechnikern und Zahnärzten als sehr unangenehm empfunden wird. Diese Kugellager können deshalb nicht abgedichtet, sondern nur abgedeckt werden. Die Deckscheiben sind in eine Außenringnut entweder fest eingepresst (feste Deckscheiben) bzw. nur lose eingelegt (lose Deckscheiben) und über einen zusätzlichen Sprengring fixiert. Eine derartige Deckscheibe hat aber den Nachteil, dass ein definierter Spalt zwischen Deckscheibe und Innenring besteht, durch den Schmiermittel nach außen gelangen kann. Im medizinischen Bereich, insbesondere im Dental-Turbinenlager, wird der Effekt des Schmiermittelaustritts dadurch verstärkt, dass die Versorgungsluft der Turbine nicht nur über den Abluftkanal, sondern auch über das Turbinenlager nach außen entweichen kann. Dies führt zu einem Transport des Schmiermittels (Schmierfett bzw. Schmieröl) nach außen.

Der einerseits als Additiv zur Verringerung des Reibwertes vorgesehene Festschmierstoff ist ein Fluorpolymer, vorzugsweise ein perfluoriertes Polymer. Im Rahmen der vorliegenden Erfindung ist als Festschmierstoff Polytetrafluorethylen (PTFE) besonders bevorzugt, vorzugsweise ein solches mit einem Molekulargewicht von 500.000 bis 10.000.000 g/mol. Copolymere von Polytetrafluorethylen mit anderen geeigneten fluorhaltigen oder geeigneten nicht-fluorhaltigen Monomeren, die eine reibungsverringernde Wirkung aufweisen, können auch verwendet werden. Die vorstehend angeführten Festschmierstoffe erzielen im Misch- bzw. Flüssigkeitsschmierungsbereich, d.h. nach Erstbefettung bzw. Erstbeölung im Verbund mit beispielsweise Baumwollgewebe-verstärktem Epoxidharz durch Reduzierung der Reibung (zwischen Kugeln und Käfig bzw. Käfig und Innenring- oder Außenring-Führung) eine verbesserte Lebensdauer.

Der andererseits als Additiv zur Verringerung des Reibwertes vorgesehene Bestandteil ist ein niederviskoses, sterilisationsfestes Öl, welches auf Mineralöl, Silikonöl, Esteröl oder perfluoriertem Polyetheröl basiert. Derartige Öle weisen üblicherweise eine Viskosität in einem Bereich von bis zu 100 mm²/s bei 40°C auf. Durch diese niederviskosen Öle werden nach Austritt des Schmiermittels aus dem Lager-Innenraum Notlaufeigenschaften generiert, um den Käfig auch im Grenzreibungsbereich mit minimalem Verschleiß betreiben zu können. Ein Fachmann ist in der Lage, aus den vorstehenden Ölen ein solches auszuwählen, das dem Erfordernis der Sterilisationsfestigkeit genügt. Unter sterilisationsfest ist im Rahmen der vorliegenden Erfindung zu verstehen, daß das eingesetzte Öl für eine Dampfdrucksterilisation bei 136°C geeignet ist. Des weiteren sollte das zur Verringerung des Reibwertes vorgesehene, niederviskose, sterilisationsfeste Öl mit dem in das Wälz- bzw. Kugellager eingebrachten Schmieröl bzw. mit dem Grundöl des in das Wälz- bzw. Kugellager eingebrachten Schmierfettes verträglich sein. Derartige niederviskose Öle sind im Handel erhältlich. Beispielhaft können hier Turmotempoil 400-02 VAC, erhältlich von Lubcon (Beispiel für perfluoriertes Polyetheröl), Nye Synthetic Oil 182S, erhältlich von Nye (Beispiel für Poly-α-olefin), Nye Delicate Machinery Oil 154, erhältlich von Nye (Beispiel für Mineralöl), bzw. Klübersynth D2-46, erhältlich von Klüber (Beispiel für Esteröl), genannt werden.

Unter einem Epoxidharz werden handelsübliche Epoxidharze verstanden, die im wesentlichen flüssige, viskose, glasige Substanzen sind, die vor einer entsprechenden Verarbeitung mit geeigneten Härtern und gegebenenfalls mit Lösungsmitteln oder reaktiven Verdünnern versetzt werden. Das hier beschriebene Epoxidharz kann kalt, d.h. bei etwa Raumtemperatur, oder heiß gehärtet werden, d.h. bei etwa 80°C oder mehr. Härter für die Epoxidharzverarbeitung bzw. -härtung sind Härter auf Aminbasis für die Kalt- und Warmhärtung oder Härter auf Säureanhydridbasis für die Warmhärtung. Eine Härtung ohne Zusatz eines Härters ausschließlich durch Wärmebehandlung ist jedoch auch denkbar.

Härter auf Aminbasis umfassen polyfunktionelle aliphatische Amine, insbesondere Diethylentriamin, Dimethylaminopropylamin, lsophorondiamin, 4,4'-Diaminodiphenylmethan sowie die entsprechenden hydrierten Derivate davon, sind jedoch nicht auf diese beschränkt.

Härter auf Säureanhydridbasis umfassen Dicarbonsäureanhydride, wie Phthalsäureanhydrid, Hexahydro- und Tetrahydrophthalsäureanhydrid sowie deren alkylsubstituierten Derivate, die in Gegenwart üblicher basischer Katalysatoren verwendet werden, sind jedoch nicht auf diese beschränkt.

Epoxidharze schließen oligomere Verbindungen mit mehr als einer Epoxidgruppe pro Molekül, vorzugsweise zwei Epoxidgruppen pro Molekül, die zur Herstellung von Duroplasten eingesetzt werden, oder die entsprechenden Duroplaste selbst ein. Die Umwandlung der Epoxidharze in Duroplaste erfolgt durch Polyadditionsreaktion mit den vorstehend beschriebenen, auf dem Fachgebiet bekannten Härtern.

In der vorliegenden Erfindung geeignete Epoxidharze sind beispielsweise Umsetzungsprodukte von Bisphenol A mit Epichlorhydrin, o-, m- oder p-Kresol mit Epichlorhydrin und Phenol-Novolaken (d.h. Methylol-Gruppen-freie Phenolharze, deren aromatische Ringe über Methylengruppen verknüpft sind, die ein Molekulargewicht von etwa 500 bis 5000 g/mol aufweisen) mit Epichlorhydrin, sind jedoch nicht darauf beschränkt.

Der erfindungsgemäß eingesetzte, verstärkte Verbundwerkstoff umfaßt Fasern oder Gewebe, die den Verbundwerkstoff mechanisch belastbarer machen. Die Fasern oder das Gewebe in dem verstärkten Verbundwerkstoff sind vorzugsweise aus Baumwollfasern, Glasfasern, Kohlefasern, Aramidfasern und Borfasern bzw. Geweben aus Leinen oder Seide ausgewählt, wobei andere Fasern mit ähnlichen Eigenschaften auch verwendet werden können. Vorzugsweise wird ein Baumwollfeinstgewebe eingesetzt, mehr bevorzugt ein solches, das mit einer Maschenweite von mindestens 45 Fäden/cm gewebt ist.

Der verstärkte Verbundwerkstoff kann ferner je nach den individuellen Anforderungen übliche, auf dem Fachgebiet bekannte Hilfsstoffe, Füllstoffe und Pigmente enthalten.

Der Anteil der für die Bildung des erfindungsgemäß eingesetzten, verstärkten Verbundwerkstoffs erforderlichen Komponenten wird nach den geforderten Eigenschaften des gehärteten Epoxidharzes passend ausgewählt. Der Anteil (in Volumenprozent) an Epoxidharz bzw. Fasern oder Gewebe wie z.B. Baumwolle beträgt üblicherweise jeweils 20 bis 60 Vol.-%, vorzugsweise jeweils 40 bis 50 Vol.-%. Der Anteil an Festschmierstoff, vorzugsweise PTFE, beträgt üblicherweise 5 bis 20 Vol.-%, vorzugsweise 5 bis 15 Vol.-%. Das niederviskose Öl wird in der Regel erst nach der mechanischen Fertigung in den Käfigwerkstoff eingelagert. Der Anteil des eingelagerten Öls liegt üblicherweise bei 0,5 bis 5, vorzugsweise 1,5 bis 3 Gew.-%, bezogen auf den Käfigwerkstoff.

Der gemäß der vorliegenden Erfindung verwendete, verstärkte Verbundwerkstoff weist den Vorteil einer guten thermischen Belastbarkeit bis etwa 180°C auf und ist demgemäß für eine entsprechende Sterilisierungsbehandlung gut geeignet. Die Kombination des Verbundwerkstoffes, d.h. dem "gewebe- bzw. faserverstärkten Epoxidharz", mit den beschriebenen Additiven verleiht dem Käfigwerkstoff die Eigenschaft, selbst bei Mangelschmierung nur geringfügig abrasiv zu verschleißen, ganz im Gegensatz zu den in der Medizintechnik verbreiteten Käfigwerkstoffen Polyimid (Handelsbez.: Vespel (Fa. Dupont), Meldin (Fa. Saint-Gobain), Sintimid (Fa. Ensinger)), Polyamidimid (Handelbez.: Torlon (Fa. Solvay Advanced Polymers)) und Polyetheretherketon (Handelsbez.: Tecapeek (Fa. Ensinger)). Aufgrund der in den Verbundwerkstoff eingearbeiteten Additive zur Verringerung des Reibwertes ist die Lebensdauer des erfindungsgemäßen Käfigs gegenüber bislang bekannten Kunststoff-Kugellagerkäfigen signifikant verlängert.

Ferner stellt die vorliegende Erfindung ein Verfahren zur Herstellung eines Käfigs für Wälzlager, insbesondere Kugellager, bereit, worin ein Gewebe oder Fasern in einem Gemisch aus Epoxidharz und mindestens einem Festschmierstoff, wie vorstehend ausgeführt, zur Verringerung des Reibwerts getränkt wird, das getränkte Gewebe zu einem röhrenförmigen Prepreg geformt wird, das röhrenförmige Prepreg unter Erhalten eines röhrenförmigen verstärkten Verbundwerkstoffs gehärtet wird, der anschließend in die Form eines Wälzlagerkäfigs bearbeitet wird. Anschließend wird ein niederviskoses sterilisationsfestes Öl, wie vorstehend ausgeführt, nach Fertigung des Käfigs durch eine Vakuum- und/oder Hochdruckbehandlung in den Verbundwerkstoff eingebracht.

Das Härten des röhrenförmigen Prepregs kann, wie vorstehend bereits für die Härtung des Epoxidharzes beschrieben, kalt, d.h. bei etwa Raumtemperatur, oder heiß, d.h. bei etwa 80°C oder mehr, durchgeführt werden. Für eine Warmhärtung kann sowohl ein Härter auf Aminbasis als auch ein Härter auf Säureanhydridbasis verwendet werden, wobei für eine Kalthärtung meist ein Härter auf Aminbasis verwendet wird. Eine Warmhärtung ohne Zugabe eines Härters ist jedoch auch möglich. Vorzugsweise wird das röhrenförmige Prepreg in einem Temperaturbereich von 120°C bis 180°C, besonders bevorzugt in einem Temperaturbereich von 160°C bis 170°C, gehärtet.

Unter dem hier verwendeten Ausdruck "Prepreg" ("pre impregnated material") versteht man Fasermatten bzw. Gewebematten, die aus Fasern, Geweben oder Filamenten aufgebaut sind und mit durch Wärme oder einen Härter härtbarem Epoxidharz imprägniert bzw. getränkt sind. Gemäß der vorliegenden Erfindung sind diese vorimprägnierten Matten vorzugsweise in Form einer Röhre gestaltet.

Der erhaltene röhrenförmige verstärkte Verbundwerkstoff kann durch jedes auf dem Fachgebiet bekannte Verfahren in die entsprechende Form für einen Wälz- bzw. Kugellagerkäfig bearbeitet werden, wobei ein spanendes Bearbeiten, Drehen, Bohren und Gleitschleifen in die Form eines Käfigs für ein Wälz- bzw. Kugellager bevorzugt ist.

Ferner ist es bevorzugt, das in dem Epoxidharz und dem Festschmierstoff zur Verringerung des Reibwerts, wie insbesondere PTFE, getränkte Gewebe, das zu einem röhrenförmigen Prepreg geformt wird, von Unregelmäßigkeiten, wie Lufteinschlüssen, ungleichmäßige Verteilung von Gewebe oder Fasern und Epoxidharz, etc., zu befreien. Dies kann durch auf dem Fachgebiet übliche Mittel erreicht werden.

Die Vorteile des erfindungsgemäßen Käfigwerkstoffs bzw. daraus gefertigten Käfigs sind nachfolgend zusammengefasst:
- Das vorstehend beschriebene verstärkte Verbundwerkstoffmaterial läßt sich sehr gut spanend bearbeiten (drehen, bohren, gleitschleifen). Es läßt sich deutlich besser als ein Standardwerkstoff, beispielsweise aus gewebeverstärktem Phenolharz, bearbeiten. Das verwendete Gewebe, beispielsweise Baumwollgewebe, läßt sich sauber schneiden, so daß eine Nachbehandlung mit Säure entfallen kann.
- Die erfindungsgemäßen Käfige, die aus dem vorstehend beschriebenen verstärktem Verbundwerkstoff hergestellt sind, ermöglichen bei einer Anwendung in hochtourigen Kugellagern (Drehzahlkennwert n x dm > 1.000.000 mm/min) gegenüber bisherigen Standardlagern mit einem Käfig aus Polyimid, Polyamidimid, Polyetheretherketon bzw. gewebeverstärktem Phenolharz eine deutlich verlängerte charakteristische Lebensdauer. Insbesondere eignen sich die erfindungsgemäßen Käfige für industrielle Spindellageranwendungen und für den medizinischen Bereich, insbesondere in der Dentaltechnik.
- Die Sterilisierungseigenschaften des erfindungsgemäßen Käfigs, der aus dem vorstehend beschriebenen verstärkten Verbundwerkstoff hergestellt ist, sind im Vergleich zu gewebeverstärktem Phenolharz verbessert.

Das in den Verbundwerkstoff eingelagerte, niederviskose sterilisationsfeste Öl schützt das Gewebe bzw. die Fasern vor dem Eindringen des Heißdampfes, wodurch die Reißfestigkeit des Gewebes bzw. der Fasern nicht signifikant reduziert wird.

Nachfolgend wird beispielhaft ein Verfahren zur Herstellung eines erfindungsgemäßen Käfigs beschrieben, ohne auf dieses beschränkt zu werden:

### Beispiel

Zunächst wird ein Baumwollgewebe (mit einer wie in DIN EN 61212 beschriebenen Feinheit des Baumwollgewebes mit mindestens 45 Fäden pro cm) mit einem geeigneten Gemisch aus Epoxidharz und Teflon getränkt und zu einem röhrenförmigen Prepreg geformt bzw. aufgewickelt.

Das verwendete Baumwollgewebe ist gemäß DIN EN 61212 mit 45 Fäden pro cm als Feingewebe eingestuft. Weiterverarbeitet wird die Baumwolle nach einem Wasch- und Bleichprozeß. Zunächst wird das Baumwollgewebe durch ein gängiges Laminierverfahren mit Epoxidharz durchtränkt. Bei dem Harz handelt es sich gemäß DIN EN 61212 um ein Epoxidharz entsprechend Hgw 2372 bzw. Hgw 2372.4, wobei das Harz vor dem Laminiervorgang mit einem Härter auf Aminbasis versetzt wird, der durch Zuführung von Wärme durch Polyaddition den Aushärtungsprozess auslöst. Beim Laminieren, d.h. wahrend des imprägnierens der Baumwolle mit Epoxidharz wird PTFE in Feinpulverform über eine Dosiereinrichtung zugeführt. Es ist dabei darauf zu achten, dass sich die PTFE-Flocken in der Harzmatrix separieren und nicht aufschwimmen.

Bei der Herstellung des Prepregs ist von besonderer Bedeutung, daß jede Unregelmäßigkeit hinsichtlich des Gewebes, der Durchtränkung oder einer sonstigen Beschädigung bei der Herstellung der röhrenförmigen Prepregs vermieden wird. Die weitere Verarbeitung besteht in einem Aufwickeln, Aushärten und Schleifen des aus dem röhrenförmigen Prepreg gebildeten röhrenförmigen verstärkten Verbundwerkstoffs. Der Arbeitsschritt des Wickelns wird über Stangen, die entsprechend dem gewünschten Innendurchmesser ausgewählt sind, durchgeführt. Hierbei wird das Gewebe des Prepregs über eine Heizwalze und eine Führungswalze geführt und während des Wickelns von einer Druckwalze auf den über einen Kardan angetriebenen Wickelstab, der frei auf diesen beiden Walzen liegt, aufgepresst. Die gewickelten Rohre werden an der Wickelstange senkrecht aufgehängt, bei 120°C bis 180°C gehärtet und anschließend spitzenlos geschliffen.

Die so entstandene, gewickelte Röhre bildet das Prepreg. Das Halbzeug (in Rohrform) entsteht, indem, wie oben beschrieben, das Prepreg auf Rundstäben mit definierten Durchmessern aufgewickelt und durch Aufhängen in einem Ofen ausgehärtet werden. Letzter Arbeitsgang ist das "Spitzenlos-Schleifen" der Außendurchmesser. Dies wird auf handelsüblichen "Spitzenlos-Schleifmaschinen" durchgeführt.

Die Weiterbearbeitung der Halbzeuge zu Kugellagerkäfigen erfolgt idealerweise auf CNC-Drehmaschinen. Mit verschleißfesten Bohr- und Drehwerkzeugen (Werkzeuge mit Hartmetall-, PKD- bzw. Diamantschneiden) werden Innenform, Außenform, Kantenübergänge und Planflächen gedreht und die Kugeltaschen entsprechend der vorgegebenen Teilung gebohrt. Um Käfige ohne anhaftende Späne und Grate zu erhalten, sind diese in einer Gleitschleifanlage zu entgraten, idealerweise mit keramischen Gleitschleifkörpern.

Das mindestens eine niederviskose, sterilisationsfeste Öl, welches verträglich mit dem in das Kugellager eingebrachten Schmieröl (bzw. verträglich mit dem Grundöl des in das Kugellager eingebrachten Schmierfettes) ist, wird erst nach mechanischer Fertigstellung des Käfigs eingebracht. Dazu sind die Käfige zu trocknen, um den Wassergehalt, der über die Luftfeuchtigkeit in das Baumwollgewebe eingelagert ist, zu eliminieren. Unmittelbar nach dem Trocknen sind die Käfige als Schüttgut zusammen mit dem Öl in einen Reaktor zu geben, der mit Vakuum (Absolutdruck ca. 0,002 bar) beaufschlagt wird, um das Schüttgut zu entgasen und um das Öl einzulagern. Dieser Effekt kann zusätzlich mit einer Hochdruckbehandlung (Absolutdruck ca. 250 bar) verstärkt werden, indem noch weiteres Öl durch die Kapillaren der Baumwollfasern in den Werkstoff eingelagert wird. Während dem Evakuieren bzw. der Hochdruckbehandlung herrscht im Reaktor eine Temperatur von 60 bis 120°C, vorzugsweise ca. 80°C. Nach Entnahme der Käfige und Reinigen der Oberflächen können die Käfige für die Montage des Kugellagers bereitgestellt werden. Die eingelagerte Ölmenge liegt je nach Viskosität und Dichte des Öls üblicherweise bei 0,5 bis 5, vorzugsweise 1,5 bis 3 Gew.-%, bezogen auf den Käfigwerkstoff.

## Patentansprüche

1. Käfig für ein Wälzlager, insbesondere ein Kugellager, welcher einen verstärkten Verbundwerkstoff umfasst, der aus Epoxidharz und Fasern oder Gewebe aufgebaut ist und wobei der verstärkte Verbundwerkstoff als Additiv zur Verringerung des Reibwerts sowohl mindestens einen Festschmierstoff, ausgewählt aus Fluorpolymeren, vorzugsweise perfluorierten Polymeren, insbesondere Polytetrafluorethylen, als auch mindestens ein niederviskoses, sterilisationsfestes Öl auf Basis von Mineralöl, Silikonöl, Esteröl oder perfluoriertem Polyetheröl enthält.

2. Käfig nach Anspruch 1, wobei die Fasern oder das Gewebe aus Baumwollfasern, Glasfasern, Kohlefasern, Aramidfasern und/oder Borfasern bzw. Gebe aus Leinen oder Seide aufgebaut ist/sind.

3. Käfig nach Anspruch 2, wobei ein Baumwollfeinstgewebe eingesetzt wird, das mit einer Maschenweite von mindestens 45 Fäden/cm gewebt ist.

4. Käfig nach einem der vorhergehenden Ansprüche 1 bis 3, wobei der Anteil in Volumenprozent an Epoxidharz bzw. Fasern oder Gewebe jeweils 20 bis 60 Vol.-% beträgt, und wobei der Anteil an Festschmierstoff 5 bis 20 Vol.-%, beträgt und niederviskoses Öl in einer Menge von 0,5 bis 5 Gew.-%, bezogen auf den Käfigwerkstoff, vorliegt.

5. Verfahren zur Herstellung eines Käfigs nach einem der Ansprüche 1 bis 4, worin ein Gewebe oder Fasern in einem Gemisch aus Epoxidharz und mindestens einem Festschmierstoff getränkt wird, das getränkte Gewebe zu einem röhrenförmigen Prepreg geformt wird, das röhrenförmige Prepreg unter Erhalten eines röhrenförmigen verstärkten Verbundwerkstoffs gehärtet wird, der anschließend in die Form eines Wälzlagerkäfigs bearbeitet wird, und anschließend nach Fertigung des Käfigs mindestens ein niederviskoses sterilisationsfestes Öl durch eine Vakuum- und/oder Hochdruckbehandlung in den Verbundwerkstoff eingebracht wird.

6. Verfahren nach Anspruch 5, worin das röhrenförmige Prepreg in einem Temperaturbereich von 120°C bis 180°C gehärtet wird.

7. Verfahren nach Anspruch 5 oder 6, worin der erhaltene röhrenförmige verstärkte Verbundwerkstoff durch spanendes Bearbeiten, Drehen, Bohren und Gleitschleifen in die Form eines Wälzlagerkäfigs bearbeitet wird.

8. Verfahren nach einem der Ansprüche 5 bis 7, worin das in dem Epoxidharz und dem Festschmierstoff getränkte Gewebe, das zu einem röhrenförmigen Prepreg geformt wird, von Unregelmäßigkeiten befreit wird.

9. Verwendung eines Käfigs nach einem der Ansprüche 1 bis 4 oder erhalten gemäß dem Verfahren nach einem der Ansprüche 5 bis 7 in einem hochtourigen Kugellager mit einem Drehzahlkennwert n x dm > 1.000.000 mm/min, insbesondere für industrielle Spindellageranwendungen und im medizinischen Bereich, insbesondere in der Dentaltechnik.
